(19) **Europäisches Patentamt**

**European Patent Office**

**Office européen des brevets**

(11) **EP 0 809 006 B1**

(12) **EUROPEAN PATENT SPECIFICATION**

(45) Date of publication and mention
of the grant of the patent:
**24.03.2004 Bulletin 2004/13**

(51) Int Cl.⁷: **F02D 33/02**

(21) Application number: **97108413.2**

(22) Date of filing: **23.05.1997**

(54) **Apparatus for controlling engine intake air**

Gerät zur Ansaugluftsteuerung

Appareil de commande de l'air d'admission

(84) Designated Contracting States:
**DE FR GB**

(30) Priority: **24.05.1996 JP 130096**

(43) Date of publication of application:
**26.11.1997 Bulletin 1997/48**

(73) Proprietor: **TOYOTA JIDOSHA KABUSHIKI
KAISHA
Aichi-ken (JP)**

(72) Inventor: **Tsuzuki, Naoyuki
Toyota-shi, Aichi-ken 471 (JP)**

(74) Representative:
**Pellmann, Hans-Bernd, Dipl.-Ing. et al
Patentanwaltsbüro
Tiedtke-Bühling-Kinne & Partner
Bavariaring 4-6
80336 München (DE)**

(56) References cited:
**GB-A- 2 216 596          US-A- 4 342 299
US-A- 4 549 517**

• **PATENT ABSTRACTS OF JAPAN vol. 009, no.
077 (M-369), 6 April 1985 (1985-04-06) & JP 59
206632 A (MIKUNI KOGYO KK), 22 November
1984 (1984-11-22)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates generally to an apparatus for controlling intake air of an internal combustion engine. More particularly, the present invention relates to an apparatus that controls an intake restriction valve located in an intake passage for controlling the amount of intake air supplied to the engine.

An intake restriction valve is located in an intake passage of an engine. The opening of the valve is controlled for adjusting the amount of intake air supplied to the engine. Conventionally, such a valve is operably connected to an accelerator pedal by a wire. This allows the opening of the valve to be varied in accordance with the amount of depression of the pedal. However, in this construction, the valve opening corresponds to amount of pedal depression in a directly proportional relationship. It is thus difficult to adequately control the opening of the valve in accordance with the running condition of the engine.

A restriction valve that is moved by an actuator has been devised for eliminating the above drawback. The actuator is controlled based on the amount of depression of an accelerator pedal and other parameters that represent the running condition of the engine. This construction allows the opening of the valve to be adequately controlled in accordance with the engine's running condition.

Since the intake restriction valve is located in the intake passage, the pressure of air flow in the passage acts on the valve and produces a force that rotates the valve. Therefore, in order to change the opening of the valve, the actuator needs to vary its force in accordance with the rotating force produced by the air flow in the passage. However, the rotating force produced by the intake air pressure acting on the restriction valve has never been taken into account for controlling the actuator. Thus, changing the valve opening to a target opening takes a relatively long time. This degrades the control of the restriction valve.

For example, the documents US-A-4549517, GB-A-2216596 and JP-A-59206632 show generic apparatuses for controlling intake air of an internal combustion engine according to the preamble of claim 1.

SUMMARY OF THE INVENTION

It is the object of the present invention to provide an improved apparatus for controlling the opening of an intake restriction valve located in an intake passage of an internal combustion engine.

According to the invention, this object is solved by an apparatus having the features as defined in claim 1. Further embodiments of the invention are set forth in the subclaims.

Other aspects and advantages of the invention will become apparent from the following description, taken in conjunction with the accompanying drawings, illustrating by way of example the principals of the invention.

The invention, together with objects and advantages thereof, may best be understood by reference to the following description of the presently preferred embodiments together with the accompanying drawings.

Fig. 1 is a diagrammatic cross-sectional view illustrating an engine system according to a first embodiment of the present invention;

Fig. 2(a) is an enlarged diagrammatic cross-sectional view illustrating a fully open intake restriction valve;

Fig. 2(b) is an enlarged diagrammatic cross-sectional view illustrating a fully closed intake restriction valve;

Fig. 3 is a block diagram showing the structure of an electronic control unit;

Fig. 4 is a flowchart illustrating a valve control control routine;

Fig. 5 is a graph showing the relationship of a target opening, a final control value and a basic control value;

Figs. 6(a) and 6(b) are schematic side views illustrating the relationship between the position of an intake restriction valve and the course of air flow;

Fig. 7 is a graph showing changes of a target opening of an intake restriction valve and an actual opening with time;

Fig. 8 is a schematic side view for explaining the operation of an intake restriction valve;

Fig. 9 is a flowchart illustrating a valve opening control routine according to a second embodiment of the present invention;

Fig. 10 is a graph showing the relationship between a compensation control value and a difference between a target opening of a valve and an actual opening of the valve;

Fig. 11 is a graph showing change of a target opening and an actual opening with time according to a second embodiment;

Fig. 12 is a graph showing changes of a target opening and an actual opening with time according to a second embodiment;

Fig. 13 is a flowchart illustrating a valve opening control routine according to another embodiment of the present invention; and

Fig. 14 is a flowchart illustrating a valve opening control routine that follows the flowchart of Fig. 13.

A first embodiment of an intake control apparatus in a diesel engine will now be described with reference to the drawings.

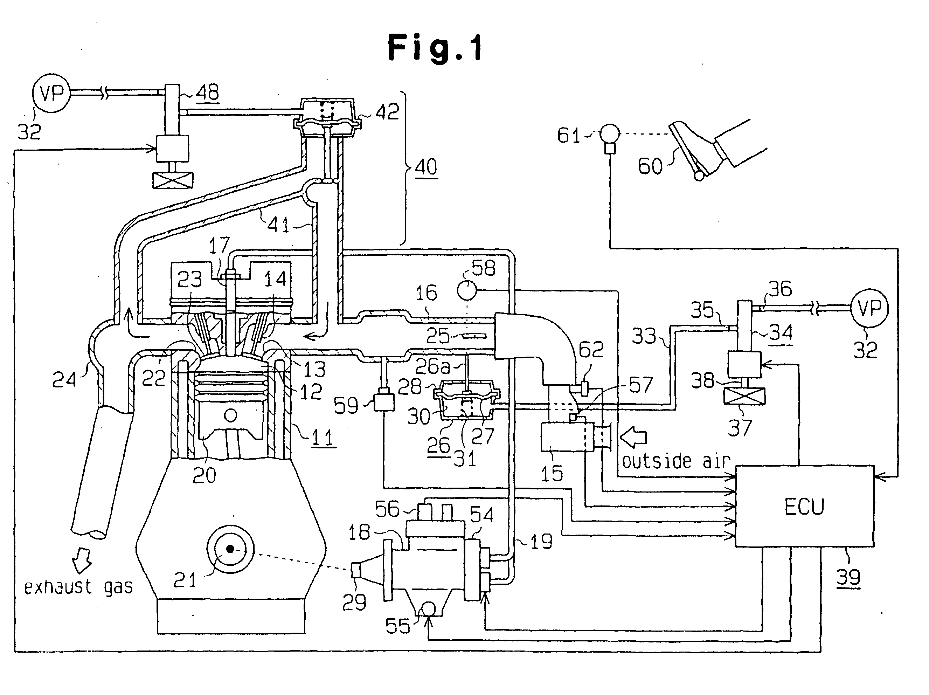

As shown in Fig. 1, a diesel engine 11 includes a plurality of cylinders (only one is shown) and a crankshaft 21. A piston 20 is accommodated in each cylinder and coupled to the crankshaft 21 by a rod. The inner wall of each cylinder and the associated piston 20 define a combustion chamber 12. A fuel injection nozzle 17 is provided in the end of each cylinder. The nozzles 17 are connected to a fuel injection pump 18 by a fuel line 19. The combustion chambers 12 are connected to an air-intake passage 16. Specifically, the passage 16 has a plurality of suction ports 13, each of which is connected to one of the combustion chambers 12. Each suction port 13 is opened and closed by an intake valve 14. An air cleaner 15 is attached to the distal end of the passage 16. The combustion chambers 12 are also connected to an exhaust passage 24. Specifically, the passage 24 has a plurality of exhaust ports 22, each of which is connected to one of the combustion chambers 12. Each exhaust port 22 is opened and closed by an exhaust valve 23.

During the suction stroke of the engine 11, the suction ports 13 are opened by the intake valves 14. This draws outside air into the air-intake passage 16 via the air cleaner 15. The drawn air then flows into the individual combustion chambers 12. Each fuel injection nozzle 17 injects fuel supplied under pressure by the pump 18 into the associated combustion chamber 12.

During the compression stroke, an upward movement of the piston 20 compresses air-fuel mixture in the associated combustion chamber 12, thereby causing the mixture to combust. The combustion pushes the piston 20 downward to turn the crankshaft 21. The engine 11 thus generates driving power. During the exhaust stroke, the exhaust ports 22 are opened by the exhaust valves 23. The exhaust gas generated in each combustion chamber 12 is discharged to the exhaust passage 24. The gas is then exhausted outside.

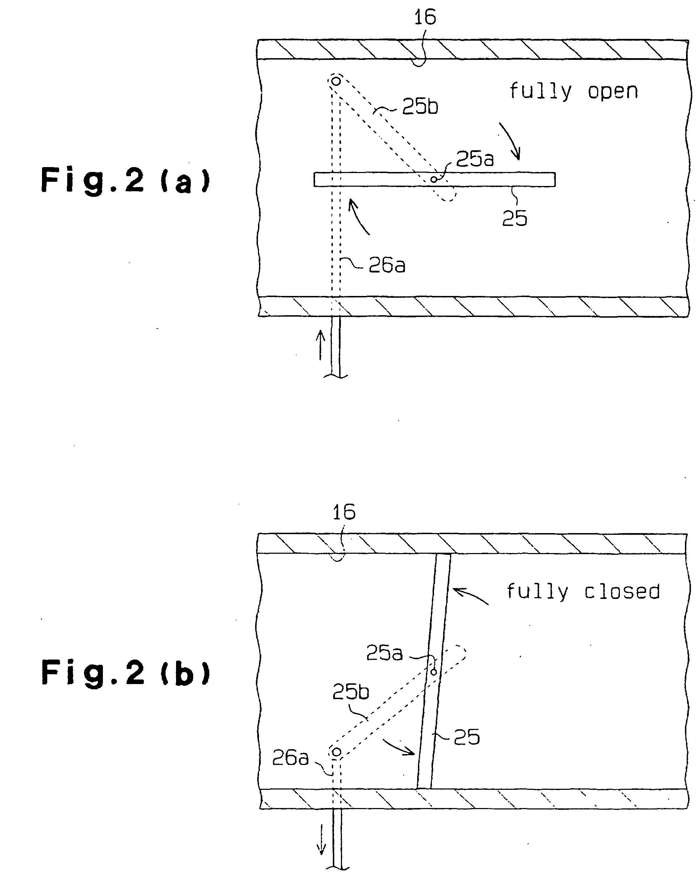

An intake restriction valve 25 is provided in the air-intake passage 16. The valve 25 is controlled by an actuator 26 for controlling the amount of air flow in the passage 16 in accordance with the running condition of the engine 11. As shown in Fig. 1, the actuator 26 includes a housing 28 and a diaphragm 27, which is located in the housing 28. The lower portion of the housing 28 and the diaphragm 27 define a pressure chamber 30. A spring 31 extends in the chamber 30 between the diaphragm 27 and the bottom of the housing 28. A rod 26a is secured to the top side of the diaphragm 27 and extends through the housing 28. The spring 31 is vertically aligned with the rod 26a and urges the rod 26a upward. As shown in Figs. 2(a) and 2(b), the valve 25 includes a shaft 25a, which is rotatably supported by the wall of the passage 16. One end of the shaft 25a protrudes from the outer surface of the passage 16. A link 25b is fixed to the protruding end of the shaft 25a. The distal end of the link 25b is connected to the distal end of the rod 26a.

The pressure chamber 30 is connected to a vacuum pump 32 via a vacuum passage 33. A first electric vacuum regulating valve (EVRV) 34 is located in the passage 33. The EVRV 34 is an electromagnetic cross valve having three ports 35, 36 and 38. The output port 35 communicates with the pressure chamber 30 of the actuator 26 by the passage 33. The negative pressure port 36 communicates with the vacuum pump 32. The atmospheric air port 38 communicates with the atmospheric air via a filter 37. The filter 37 prevents dust and mud from entering the first EVRV 34 through the atmospheric air port 38. When the first EVRV 34 is electrically enabled, the output port 35 is communicated with the negative pressure port 36. This introduces negative pressure produced by the pump 32 into the pressure chamber 30 of the actuator 26. When the first EVRV 34 is electrically disabled, the output port 35 is communicated with the atmospheric air port 38. This introduces the atmospheric pressure into the pressure chamber 30.

The first EVRV 34 is duty controlled by an electronic control unit (ECU) 39, which will be described later. The pressure in the pressure chamber 30 is controlled, accordingly.

If the ECU 39 enables the first EVRV 34 with a 100% duty ratio, the output port 35 is communicated with the negative pressure port 36. This allows negative pressure produced by the pump 32 to be introduced into the pressure chamber 30. This moves the diaphragm 27 downward and retracts the rod 26a against the force of the spring 31. The rod 26a rotates the restriction valve 25 in a direction shown by arrows of Fig. 2(b). Consequently, the valve 25 is in a fully closed position, thereby stopping the substantial air flow in the passage 16.

Contrarily, if the ECU 39 disables the first EVRV 34 with a 0% duty ratio, the output port 35 is communicated with the atmospheric air port 38. This allows the force of the spring 31 to move the diaphragm 27 and the rod 26a upward as shown in Fig. 2(a). The rod 26a rotates the restriction valve 25 in a direction shown by arrows of Fig. 2(a). Consequently, the valve 25 is in a fully opened position, thereby allowing air flow in the passage 16.

The ECU 39 controls the EVRV 34 by varying the duty ratio between 0% and 100%, thereby varying the magnitude of negative pressure that is introduced into the pressure chamber 30. The opening of the restriction valve 25 is continuously controlled between the fully closed position to the fully opened position, accordingly. The intake air amount is therefore continuously varied in accordance with the running condition of the engine 11.

The engine 11 is provided with an exhaust gas recirculation (EGR) apparatus 40. The EGR apparatus 40 includes an EGR passage 41, an EGR valve 42 and a second EVRV 48. One end of the passage 41 is connected to the exhaust passage 24 and the other end is connected to the air-intake passage 16. The EGR valve 42 is located in the passage 41. The apparatus 40 recirculates part of the exhaust gas in the exhaust passage 24 to the air-intake passage 16 through the passage 41. The recirculated gas is returned to the individual combustion chambers 12. The EGR valve 42 controls the EGR amount in the passage 41. The second EVRV 48 controls the negative pressure and the atmospheric pressure, or working pressures, that are introduced to the valve 42. The ECU 39 varies the opening of the EGR valve 42 by duty controlling the second EVRV 48 in accordance with the running condition of the engine 11. The EGR amount is thus continuously varied.

The fuel injection pump 18 is a known distribution type and supplies fuel to each injection nozzle 17 through the fuel line 19. The fuel is then combusted in each combustion chamber 12. Specifically, the injection pump 18 compresses fuel from a fuel tank (not shown) to a highly pressurized state and supplies a predetermined amount of the pressurized fuel to the individual injection nozzles 17 at a predetermined timing. Each injection nozzle 17 operates based on the pressure of the supplied fuel and injects the fuel to the associated combustion chamber 12. The injection pump 18 has an electromagnetic spill valve 54 and a timer 55. The spill valve 54 adjusts the amount of fuel to be pumped out from the pump 18. The timer 55 controls the start timing of the fuel discharge from the pump 18, that is, the timer 55 adjusts the times at which fuel is injected from each injection nozzle 17. The spill valve 54 and the timer 55 are electrically controlled by the ECU 39.

The injection pump 18 is further provided with a drive shaft 29 and a rotational speed sensor 56. The drive shaft 29 is connected to the crankshaft 21 of the engine 11. The crankshaft 21 rotates the drive shaft 29. The injection pump 18 is thus driven in response to the operation of the engine 11. The rotational speed sensor 56 detects the rotational speed of the drive shaft 29, which corresponds to the speed of the crankshaft 21. Accordingly, the sensor 56 detects the engine speed NE.

An air flow meter 57 is provided in the vicinity of the air cleaner 15. The meter 57 detects the amount Q of air drawn into the intake passage 16 and issues a signal corresponding the detected intake air amount Q.

A restriction valve sensor 58 is provided in the vicinity of the restriction valve 25. The sensor 58 detects the actual opening LUACT of the valve 25 and issues a signal corresponding to the actual opening LUACT.

An intake pressure sensor 59 is provided in the air-intake passage 16 downstream the intake air restriction valve 25. The sensor 59 detects intake pressure PM in the air-intake passage 16 and issues a signal corresponding to the intake pressure PM. An accelerator pedal sensor 61 is provided in the vicinity of the accelerator pedal 60. The sensor 61 detects the amount of depression ACCP of the pedal 60 and issues a signal corresponding to the amount of pedal depression ACCP. An intake air temperature sensor 62 is provided in the vicinity of the air flow meter 57. The sensor 62 detects the temperature THA of the outside air drawn in the passage 16 and issues a signal corresponding to the outside air temperature THA.

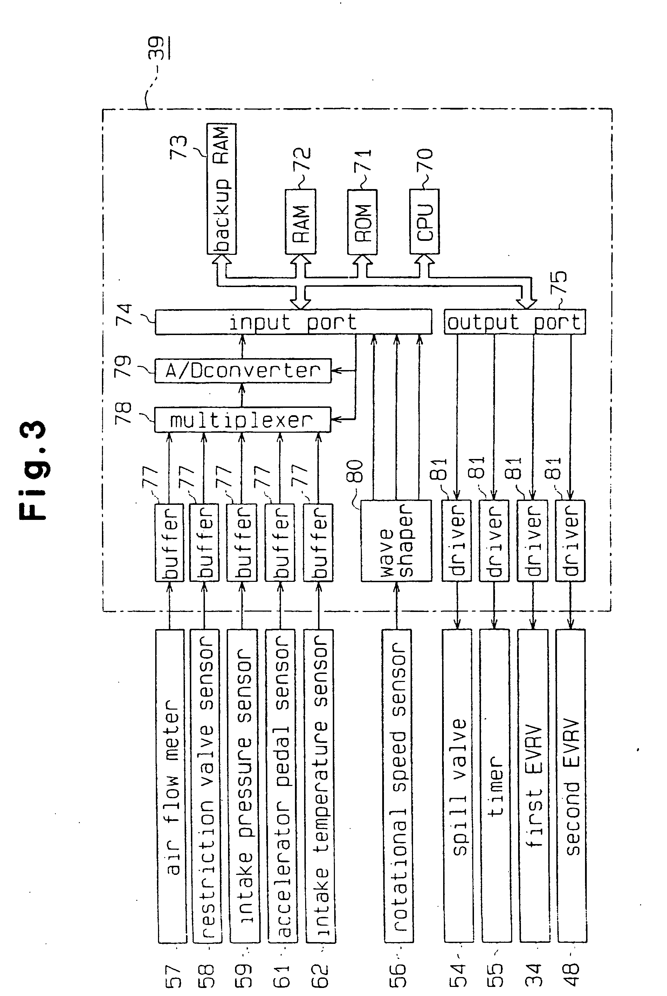

The ECU 39 receives signals transmitted from the sensors 56 to 59, 61 and 62. The structure of the ECU 39 will now be described with reference.to the block diagram of Fig. 3.

The ECU 39 includes a central processing unit (CPU) 70, a read only memory (ROM) 71, a random access memory (RAM) 72, and a backup RAM 73. The ROM 71 previously stores predetermined control programs. The RAM 72 temporarily stores the results of computations performed by the CPU 70. The backup RAM 73 retains prestored data. The ECU 39 further includes an input port 74 and an output port 75. The CPU 70, the ROM 71, the RAM 72, the backup RAM 73, the input port 74 and the output port 75 are connected one another by a bus 76.

The air flow meter 57, the valve sensor 58, the intake pressure sensor 59, the accelerator pedal sensor 61 and the intake temperature sensor 62 are connected to the input port 74 by buffers 77, a multiplexer 78 and an analogue-digital converter 79. The rotational speed sensor 56 is connected to the input port 74 by a wave shaper 80. The CPU 70 receives signals from the sensors 56 to 59, 61 and 62 via the input port 74.

The electromagnetic spill valve 54, the timer 55, the first EVRV 34 and the second EVRV 48 are connected to the output port 75 by drivers 81. The CPU 70 controls the valve 54, the timer 55 and the EVRVs 34, 48 based on the signals from the sensors 56 to 59, 61 and 62, thereby performing fuel injection control, restriction valve opening control and EGR control.

The fuel injection control refers to control of the amount of fuel discharged from the injection pump 18 and of the fuel discharging timing in accordance with the running conditions of the engine 11. The restriction valve opening control refers to actuation of the restriction valve 25 by controlling the first EVRV 34 in accordance with the running condition of the engine 11. The amount of intake air is thus controlled. The EGR control refers to actuation of the EGR valve 42 by controlling the second EVRV 48 in accordance with the running conditions of the engine 11. The EGR amount is thus controlled.

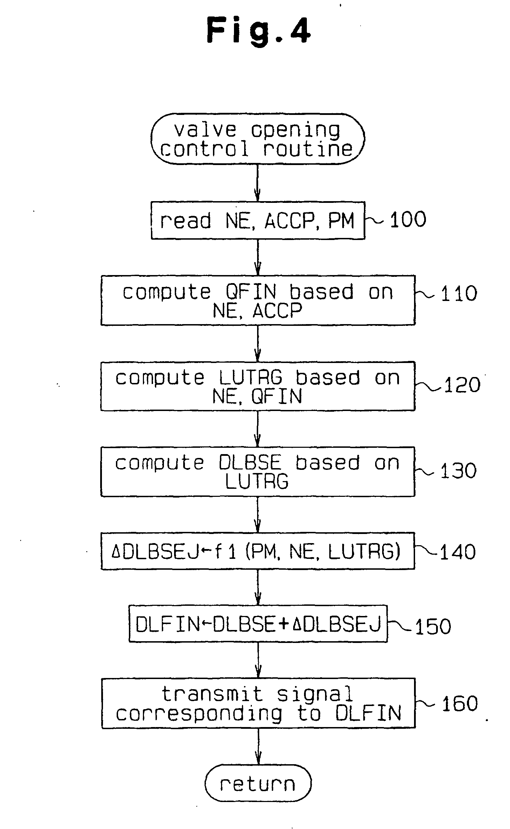

A routine for controlling the opening of the intake air restriction valve 25 (valve opening control routine) will now be described with reference to the flowchart of Fig. 4. The CPU 70 periodically performs the routine at predetermined intervals.

In step 100, the CPU 70 reads the engine speed NE, the amount of pedal depression ACCP and the intake air pressure PM, which are detected by the rotational speed sensor 56, the gas pedal sensor 61 and the intake pressure sensor 59, respectively.

In step 110, the CPU 70 computes a amount QFIN of fuel injection in accordance with the engine speed NE and the pedal depression amount ACCP based on function data previously stored in the ROM 71. In step 120, the CPU 70 computes a target opening LUTRG of the valve 25 in accordance with the injection amount QFIN and the engine speed NE based on function data previously stored in the ROM 71.

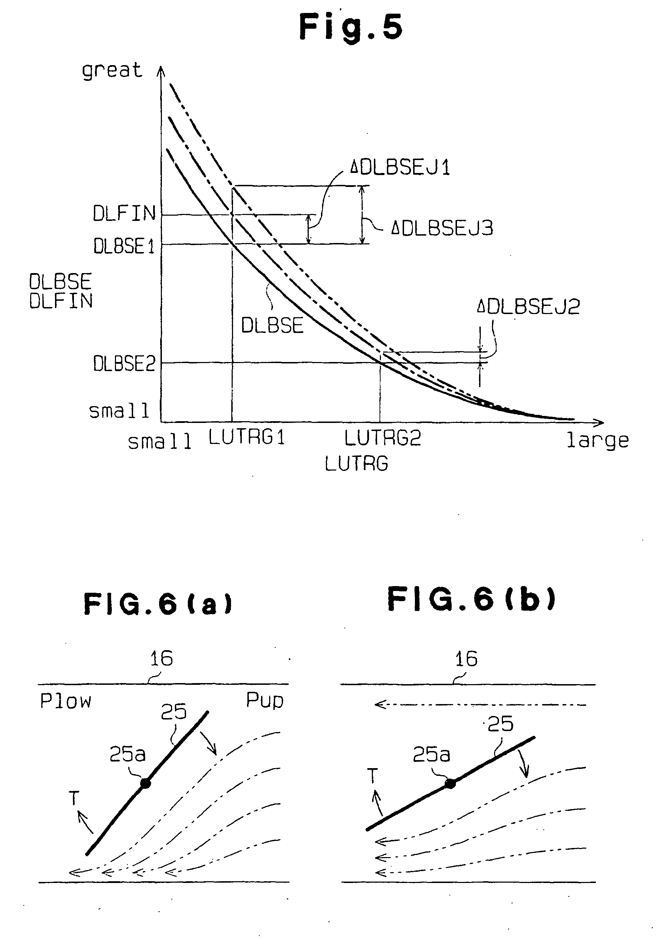

In step 130, the CPU 70 computes a basic control value DLBSE in accordance with the target opening LUTRG based on function data shown in the graph of Fig. 5. The function data is previously stored in the ROM 71. The solid line in the graph shows the relationship between the target opening LUTRG of the valve 25 and the basic control value DLBSE. In computation of DLBSE, the force of intake air pressure acting on the valve 25 is not taken into consideration.

The value DLBSE is used to determine the magnitude of force produced by the negative pressure introduced into the chamber 30 of the actuator 26. Specifically, DLBSE corresponds to duty ratio of signals transmitted to the first EVRV 34. The magnitude of the negative pressure is determined in accordance with the duty ratio. The force acts on the rod 26a and determines the opening of the valve 25 in relation with the force of the spring 31. That is, the value DLBSE corresponds to the magnitude of force produced by the negative pressure. As shown in the graph of Fig. 5, DLBSE decreases as the target opening LUTRG increases. The relationship between LUTRG and DLBSE is previously determined through experiments.

In step 130, the CPU 70 chooses a basic control value DLBSE corresponding to a target opening LUTRG based on the function data of Fig. 5. For example, if LUTRG is LUTRG1, the CPU 70 sets DLBSE to DLBSE1, and if LUTRG is LUTRG2, the CPU 70 sets DLBSE to DLBSE2.

In step 140, the CPU 70 computes a compensation control value ΔDLBSEJ based on a formula f1 (ΔDLBSEJ = f1(PM, NE, LUTRG))stored in the ROM 71. The formula f1 includes the intake air pressure PM, the engine speed NE and the target opening LUTRG as parameters. In step 150, the CPU 70 computes a final control value DLFIN by adding the compensation control value ΔDLBSEJ to the basic control value DLBSE.

The compensation control value ΔDLBSEJ compensates for the influence of the force caused by intake air pressure acting on the valve 25. Figs. 6(a) and 6(b) schematically show the air intake passage 16 and the intake restriction valve 25. The course of intake air is changed by the valve 25 when the valve 25 is in a position shown in Fig. 6(a). In this state, the pressure Pup upstream of the valve 25 and the pressure Plow downstream of the valve 25 are different. The difference between Pup and Plow is referred to as ΔP. The pressure difference ΔP gives a force T to the valve 25. The magnitude of the force T varies in accordance with the difference ΔP. The force T is a rotating force applied to the valve 25 in a direction increasing the valve's opening.

In order to equalize the actual opening LUACT of the valve 25 with a target opening LUTRG, the actuator 26 needs to apply a force that compensates for the force T to the valve 25 in addition to the force according to the basic control value DLBSE. The force compensating for the force T refers to a force that has the same magnitude with the force T in the opposite direction. In this preferred embodiment, the compensation control value ΔDLBSEJ is added to the basic control value DLBSE to compute a final control value DLFIN, thereby compensating for the force T.

The value of the compensation control value ΔDLBSEJ varies in accordance with changes in the intake air pressure PM, the engine speed NE and the target opening LUTRG.

For example, when the opening of the valve 25 increases from the state of Fig. 6(a) to the state of Fig. 6(b), the magnitude of the force T acting on the valve 25 decreases. This is because the course of intake air becomes less affected by the valve 25 and the magnitude of the force T decreases, accordingly. Therefore, in the formula f1, the compensation control value ΔDLBSEJ becomes smaller as the target opening LUTRG increases. For example, as shown in Fig. 5, a compensation control value ΔDLBSEJ2 corresponding to the target opening LUTRG2 is smaller than DLBSEJ1 corresponding to LUTRG1, which is smaller than LUTRG2.

Further, even if the target opening LUTRG is the same, the magnitude of the force T is varied by the difference (ΔP) between the pressure Plow downstream the valve 25 and the pressure Pup upstream the valve 25. Specifically, a larger pressure difference (ΔP) increases the speed of air flow through the valve 25, thereby producing a greater force T acting on the valve 25.

The pressure difference ΔP is computed by using the intake pressure PM and the engine speed NE as parameters. The pressure difference ΔP correlates with the intake air pressure PM and the engine speed NE. The pressure difference ΔP becomes smaller as the intake pressure PM decreases. In other words, a greater absolute value of vacuum pressure downstream the valve 25 increases the pressure difference ΔP. Similarly, a greater engine speed NE increases the pressure difference ΔP. The compensation control value ΔDLBSE is determined in accordance with the computed ΔP.

The alternate long and short dashed line of Fig. 5 shows the relationship between the target opening LUTRG and the final control value DLFIN for a particular engine speed NE and intake air pressure PM. The two-dot chain line also shows the relationship between LUTRG and DLFIN when the intake pressure PM is decreased from the state of the alternate long and short dashed line. As shown in Fig. 5, a smaller intake air pressure PM increases the compensation control value $\Delta$DLBSEJ, which is added to the basic control value DLBSE.

For example, a compensation control value $\Delta$DLBSEJ3, which is computed when the intake pressure PM is relatively low, is greater than a compensation control value $\Delta$DLBSEJ1, which is computed when the intake pressure PM is relatively high. Similarly, the compensation control value $\Delta$DLBSEJ becomes greater as the engine speed NE increases.

After performing the process of steps 140 and 150, the CPU 70 moves to step 160. In step 160, the CPU 70 transmits a signal, which has a duty ratio corresponding to the final control value DLFIN, to the first EVRV 34. The CPU 70 thus controls the magnitude of the force produced by negative pressure introduced in the pressure chamber 30, thereby matching the actual opening LUACT of the restriction valve 25 with the target opening LUTRG. The CPU then temporarily suspends the current routine.

The advantages and affects of the above embodiment will now be described.

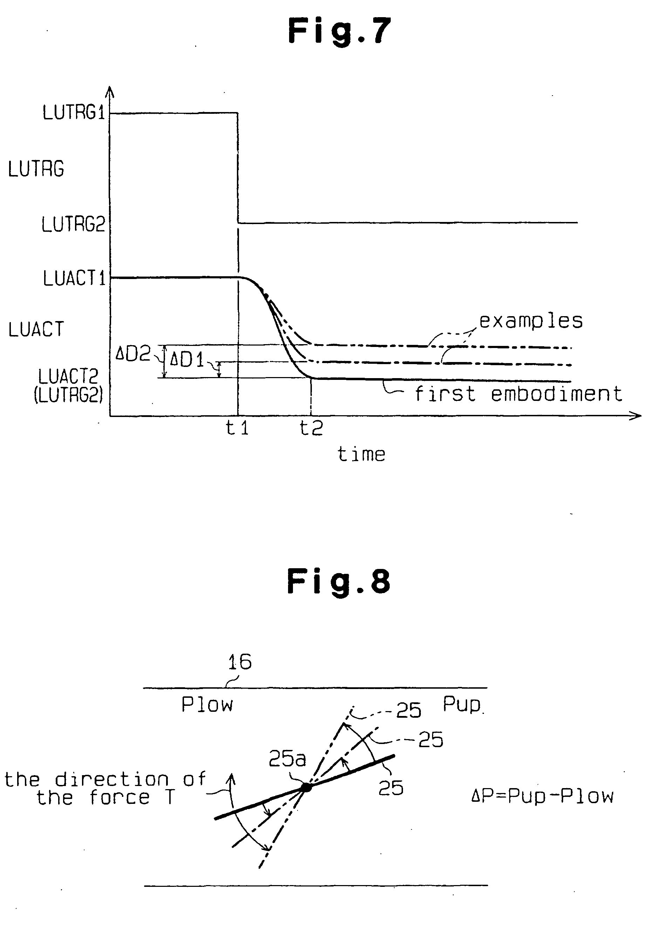

The solid line in the lower portion of Fig. 7 shows a change of the actual opening LUACT of the valve 25 when the target opening LUTRG is changed from LUTRG1 to LUTRG2 as shown in the upper portion of Fig. 7. The opening of the valve 25 changes from the state of Fig. 6(b) to the state of Fig. 6(a). As shown in Fig. 7, the target opening LUTRG is changed to LUTRG2 at a time t1. Then, the actual opening LUACT of the valve 25 changes from the current actual opening LUACT1 to an actual opening LUACT2, which is equal to the target opening LUTRG2, with a delay in the response. At a time t2, the actual opening LUACT of the valve 25 is equal to the target opening LUTRG2.

When the actual opening of the valve 25 approaches the target opening LUTRG2, that is, when the valve 25 rotates from the state of Fig. 6(b) to the state of Fig. 6(a), the force T based on the pressure difference $\Delta$P acts on the valve 25 in a direction increasing the opening of the valve 25. Therefore, in order to obtain the target opening LUTRG2, the valve 25 needs to be actuated by a force that compensate for the force T.

An alternate long and short dashed line and a two-dot chain line in Fig. 7 show changes in actual opening LUACT when the actuating force is not compensated in accordance with the force T generated by the pressure difference $\Delta$P. In the example illustrated by the long and short dashed line, the actual opening LUACT is not decreased to the target opening LUTRG2. A difference $\Delta$D1 between LUACT and LUTRG remains. If the pressure difference $\Delta$P is greater, the difference is increased to $\Delta$D2 as illustrated by the two-dot chain line.

The compensation control value $\Delta$DLBSEJ is computed in accordance with the intake pressure PM, the engine speed NE and the target opening LUTRG, and is added to the basic control value DLBSE. Accordingly, the force for actuating the valve 25 is increased by the magnitude equal to the force T. The force T is thus compensated for. Unlike the compared examples of Fig. 7, the first embodiment allows the actual opening LUACT of the valve 25 to be equalized with the target opening LUTRG.

The pressure difference $\Delta$P is computed based on the intake pressure PM and the engine speed NE. This allows $\Delta$P to be accurately computed. Further, the target opening LUTRG is taken into consideration when computing the compensation control value $\Delta$DLBSEJ. Therefore, the magnitude of the force T acting on the valve 25 is accurately computed. The valve 25 is then actuated by a force that compensates for the force T.

The influence of the force T on the restriction valve control is suppressed by a relatively simple construction compared to a system in which feedback control is performed based on the difference between the actual opening LUACT of the valve 25 and the target opening LUTRG.

A second embodiment of the present invention will now be described. Differences from the first embodiment will be mainly discussed. In this embodiment, feedback control is performed.

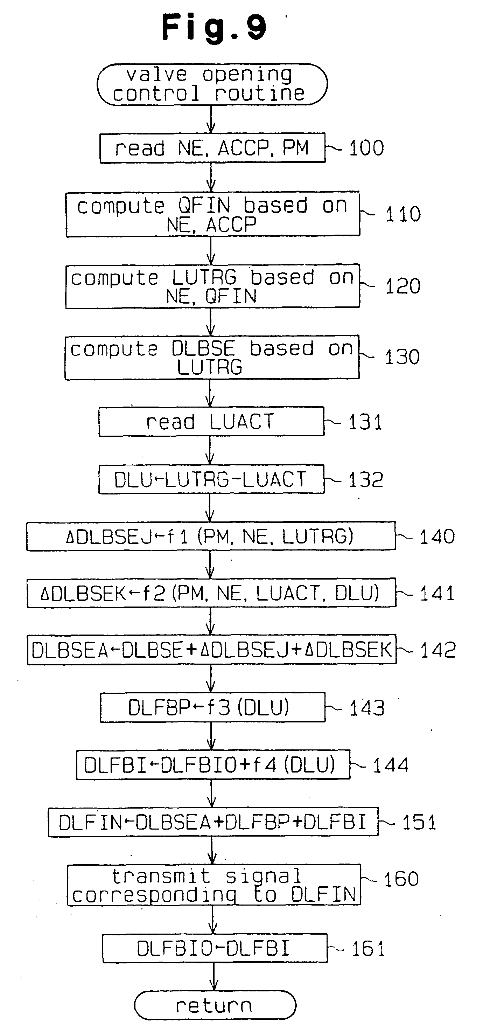

Fig. 9 shows a valve opening control routine according to the second embodiment. In the steps having the same numerals as those in the routine of Fig. 4, the same process is performed as in the first embodiment.

After performing the process of steps 100, 110, the CPU 70 moves to step 120. In step 120, the CPU 70 computes a target opening LUTRG in accordance with the engine speed NE and the injection amount QFIN.

In step 130, the CPU 70 computes a basic control value DLBSE in accordance with the target opening LUTRG based on function data previously stored in the ROM 71. In step 131, the CPU 70 inputs an actual opening LUACT of the intake restriction valve 25 from the valve sensor 58.

In step 132, the CPU 70 computes a difference DLU between a target opening LUTRG and the actual opening LUACT.

In step 140, the CPU 70 computes a compensation control value $\Delta$DLBSEJ in accordance with the intake pressure PM, the engine speed NE and the target opening LUTRG. In step 141, the CPU 70 computes a compensation control value $\Delta$DLBSEK based on a formula f2 ($\Delta$DLBSEK = f2(PM, NE, LUACT, DLU))stored in the ROM 71. The formula f2 includes the intake air pressure PM, the engine speed NE, the actual opening LUACT and the difference DLU between LUTRG and LUACT as parameters.

In step 142, the CPU 70 computes a compensated control value DLBSEA by adding the compensation control values $\Delta$DLBSEJ and $\Delta$DLBSEK to the basic control value DLBSE.

The compensation control value ΔDLBSEK will be described below.

Fig. 8 illustrates the movement of the restriction valve 25 when the actual opening LUACT is decreased. The valve 25 is moved from the state illustrated by a solid line to the state illustrated by an alternate long and short dashed line. In this case, the valve 25 needs to be moved against the force T generated by the pressure difference ΔP. The force T may produce a delay in the response of the valve's movement. When the opening of the valve 25 is decreased by a greater amount, for example, when the valve 25 is moved to the state illustrated by the two-dot chain line in Fig. 8, the delay in the response of the valve 25 is increased. The response delay of the valve 25 needs to be compensated for in order to improve the responsiveness of the valve opening control.

When increasing the actual opening LUACT of the valve 25, the actuating force for rotating the valve 25 is excessive because the force T is added to the force of the actuator 26. This causes a hunting phenomenon.

The compensation control value ΔDLBSEK is used to avoid such delay in the response of the valve and hunting phenomenon of the valve 25.

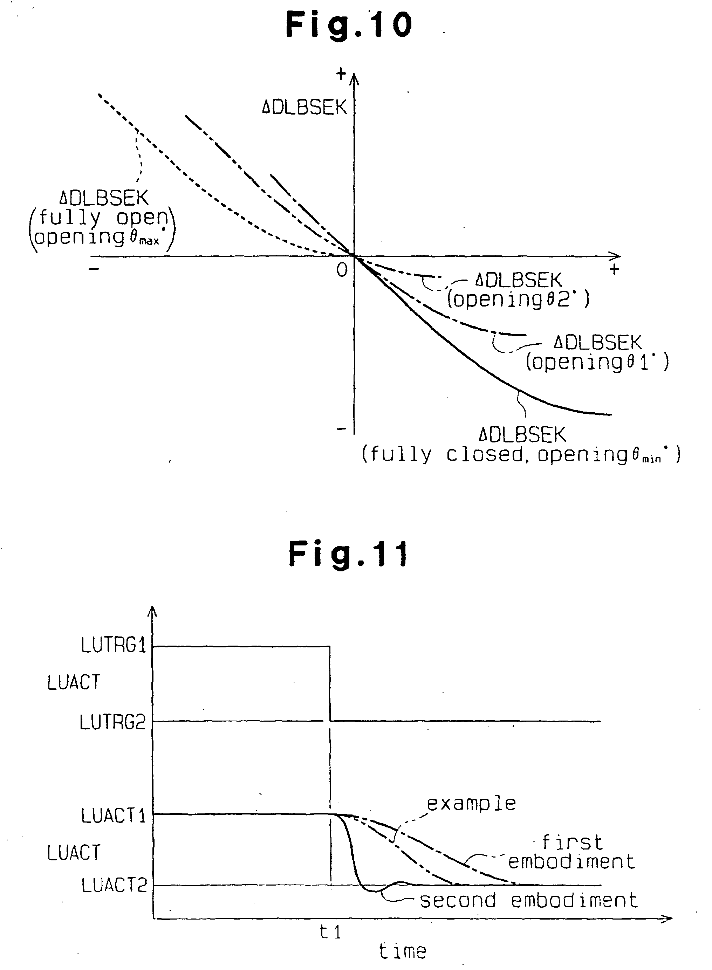

The graph of Fig. 10 shows the relationship between the opening difference DLU and the compensation control value ΔDLBSEK based on the formula f2 (ΔDLBSEK = f2 (PM, NE, LUACT, DLU)). The solid line illustrates the relationship between DLU and ΔDLBSEK when the valve 25 is fully closed, that is, when the actual opening LUACT is minimum (θ min°). The broken line illustrates the relationship between DLU and ΔDLBSEK when the valve 25 is fully open, that is, when the actual opening LUACT is maximum (θ max°). The alternate long and short dashed line illustrates the relationship between DLU and ΔDLBSEK when the actual opening LUACT of the valve 25 is θ1°. The two-dot chain line illustrates the relationship between DLU and ΔDLBSEK when the actual opening LUACT of the valve 25 is θ2°. The angles θ1° and θ2° satisfy the following inequality:

$$0° < θ1° < θ2° < θ \, max°$$

In this graph, the intake pressure PM and the engine speed NE are constant.

When the opening difference DLU is less than zero, that is, when the actual opening LUACT needs to be decreased, the compensation control value ΔDLBSEK has a positive value. Accordingly, the actuating force for rotating the valve 25 is increased. This reduces the response delay the valve 25 caused by the force T.

Contrarily, when the opening difference DLU is greater than zero, that is, when the actual opening LUACT needs to be increased, the compensation control value ΔDLBSEK has a negative value. Accordingly, the actuating force for rotating the valve 25 is decreased. The force for rotating the valve 25 is thus prevented from being excessive. This eliminates the hunting phenomenon.

A greater absolute value of the difference DLU causes the force T to have a greater influence on the valve opening control. Therefore, as shown in the graph of Fig. 10, the absolute value of the compensation control value ΔDLBSEK increases as the absolute value of the opening difference DLU increases for reducing the influence of the force T.

The compensation control value ΔDLBSEK is computed based on the formula f2 (ΔDLBSEK = f2(PM, NE, LUACT, DLU)). The absolute value of ΔDLBSEK thus increases as the intake pressure PM decreases or the engine speed NE increases.

The ROM 71 stores the formula f2 (ΔDLBSEK = f2(PM, NE, LUACT, DLU)) as a function map.. In step 141, the CPU 70 computes the compensation control value ΔDLBSEK by referring to this function map.

After performing the process of steps 140 to 142, the CPU 70 moves to step 143. In step 143, the CPU 70 computes a proportionality term DLFBP that corresponds to the opening difference DLU by using a formula f3 (DLFBP = f3(DLU)) stored in the ROM 71. The formula f3 has DLU as a parameter. The term DLFBP becomes greater as DLU increases.

In step 144, the CPU 70 computes an integration term DLFBI for the current routine baaed on the opening difference DLU and the integration term DLFBIO of the previous routine by using a formula (DLFBI = DLFBIO + f4(DLU)) stored in the ROM 71. The value of f4(DLU) becomes greater value as DLU increases.

In step 151, the CPU 70 computes a final compensation value DLFIN by adding the proportionality term DLFBP and integration term DLFBI to the compensated basic control value DLBSEA.

In step 160, the CPU 70 transmits a driving signal having a duty ratio corresponding to the final control value DLFIN to the first EVRV 34. In step 161, the CPU 70 adopts the integration term DLFBI used in the current routine as an integration term DLFBIO, which will be used in the next routine. The CPU 70 then temporarily suspends the current routine.

The advantages of the second embodiment will be described below.

In this embodiment, the compensation control value ΔDLBSEK is used for compensating for the force T in addition to ΔDLBSEJ. When the opening of the valve 25 is being decreased, a compensation control value ΔDLBSEK having a positive value is added to the basic control value DLBSE and the compensation control value ΔDLBSEJ for computing the compensated basic control value DLBSEA. The force for decreasing the opening of the valve 25 is increased, accordingly.

Fig. 11 shows the change of the actual opening LUACT of the valve 25 when the target opening LUTRG is decreased. The solid line in the lower portion of Fig. 11 shows the change of the actual opening LUACT according to the second embodiment. The two-dot chain line illustrates the change of LUACT when the basic control value DLBSE is not compensated by the compensation control value ∆DLBSEK. The alternate long and short dashed line shows the change of the actual opening LUACT according to the first embodiment of the present invention. In the example illustrated by the two-dot chain line, the actuating force for rotating the valve 25 is not sufficient. This delays the response of the valve 25 to the target opening LUTRG2. However, the second embodiment, the behavior of which is illustrated by the solid line, has little delay in the response. The actual opening LUACT is thus quickly equalized with the target opening LUTRG2.

As described above, the responsiveness of the valve opening control is improved by increasing the actuating force for rotating the valve 25 when decreasing the opening of the valve 25.

Contrarily, when the opening of the valve 25 is increased, the compensation control value ∆DLSEK, which has a negative value, is added to the basic control value DLBSE and the compensation control value ∆DLBSEJ for computing a compensated basic control value DLBSEA. In other words, the final control value DLFIN is decreased by the amount of the compensation control value ∆DLBSEK. The actuating force for increasing the opening of the valve 25 is thus decreased.

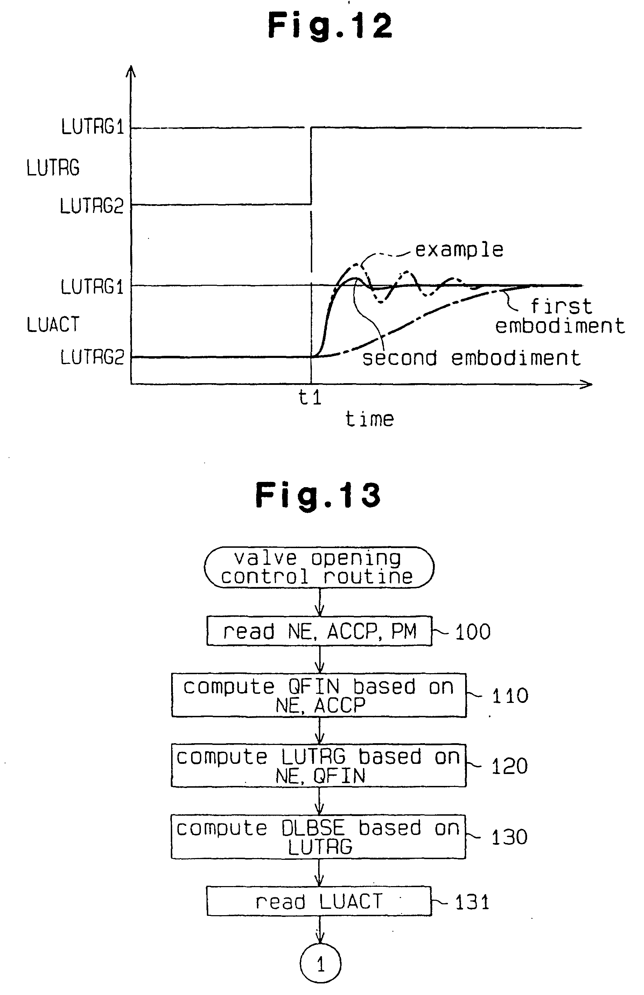

Fig. 12 shows change of the actual opening LUACT of the valve 25 when the target opening LUTRG increases. The solid curve line in the lower portion of Fig. 12 shows the change of the actual opening LUACT according to the second embodiment. The two-dot chain line illustrates change of LUACT when the basic control value DLBSE is not compensated by the compensation control value ∆DLBSEK. The alternate long and short dashed line shows the change of the actual opening LUACT according to the first embodiment of the present invention. In the example illustrated by the two-dot chain line, the actuating force for rotating the valve 25 is excessive. This creates a hunting phenomenon and delays the convergence of the actual opening LUACT of the valve 25 to the target opening LUTRG1. However, the second embodiment, which is illustrated by the solid line, creates no hunting phenomenon and allows the actual opening LUACT to quickly converge to the target opening LUTRG1.

As described above, the actuating force for rotating the valve 25 is decreased when the opening of the valve 25 is increased. This prevents the actuating force from being excessive. Hunting phenomenon is thus prevented.

The influence of the pressure difference ∆P is taken into consideration when actuating the valve 25. This improves the responsiveness of the valve 25. The actual opening LUACT of the valve 25 is thus quickly converged to the target opening LUTRG. Then, the actual opening LUACT is maintained at the target opening LUTRG as in the first embodiment.

In the engine 11, which is provided with the EGR apparatus, the EGR amount needs to be adequately controlled in accordance with the running condition of the engine 11. The actual opening LUACT of the valve 25 needs to be controlled, accordingly. This results in frequent changes of the target opening LUTRG.

If the actual opening LUACT of the valve 25 is not equalized with the target opening LUTRG, the EGR amount becomes inappropriate. This produces excessive smoke in the exhaust gas. However, the second embodiment allows the actual opening LUACT of the valve 25 to quickly and accurately follow changes of the target opening LUTRG. Therefore, the valve opening control satisfies the need in the engine having an EGR apparatus, thereby preventing the generation of excessive smoke.

The actual opening LUACT of the valve 25 is feedback controlled. This allows LUACT to be quickly equalized with the target opening LUTRG. Specifically, the basic control value DLBSE is computed in accordance with the target opening LUTRG. The influence of the force T caused by the pressure difference ∆P is taken into consideration. That is, the basic control value DLBSE is compensated such that the force T is canceled out (steps 140 to 142). Therefore, the feedback control according to the second embodiment compensates only for variation of the characteristics of the valve 25 and external perturbation. This decreases the value of the proportionality term DLFBP and the integration term DLFBI. Accordingly, the adjusting amount by the feedback control is decreased. This prevents hunting phenomenon in the feedback control.

In Fig. 5, the relationship between the target opening LUTRG of the valve 25 and the basic control value DLBSE corresponding to LUTRG is not linear. This generally delays the convergence of the actual opening LUACT to the target opening LUTRG. However, the amount of adjusting movement in the feedback control is decreased in the second embodiment. The quickens the convergence of the actual opening LUACT to the target opening LUTRG.

The present invention may be further embodied as follows. The following embodiments have the same operaiton and advantages as the above embodiment.

(1) In the above description, the compensation control value ∆DLBSEJ is determined based on the intake pressure PM, the engine speed NE and the target opening LUTRG. However, ∆DLBSEJ may be determined based only on the intake pressure PM and the target opening LUTRG or on the engine speed NE and the target opening LUTRG. Further ∆DLBSEJ may be determined based solely on the intake pressure PM or the engine speed NE. In short, ∆DLBSEJ may be determined based on any parameter so long as the parameter is correlated with the pressure difference ∆P between the pres-

sure upstream the valve 25 and the pressure downstream the valve 25.

(2) In the description of the second embodiment, the pressure difference ΔP is estimated by using the intake pressure PM and the engine speed NE as parameters when the compensation control value ΔDLBSEK is computed. However, the pressure difference ΔP may be estimated by using one of the intake pressure PM and the engine speed NE.

(3) In the above description, the intake pressure PM and the engine speed NE are used for computing the compensation control values ΔDLBSEJ and ΔDLBSEK. However, in addition to PM and NE, the intake air amount Q detected by the air flow meter 57 and the intake air temperature THA detected by the intake air temperature sensor 62 may be used for computing ΔDLBSEJ and ΔDLBSEK. This allows the influence of the pressure difference ΔP on the valve opening control to be assessed more accurately.

Further, sensors may be located at positions upstream and downstream of the valve 25 for detecting the pressure in the intake passage 16. In this case, the compensation values ΔDLBSEJ and ΔDLBSEK are computed by ΔP computed based on the pressures detected by the sensors.

(4) In the above description, the intake restriction valve 25 is controlled by the diaphragm type actuator 26 and the first EVRV 34. However, the valve 25 may be operated by, for example, a stepping motor.

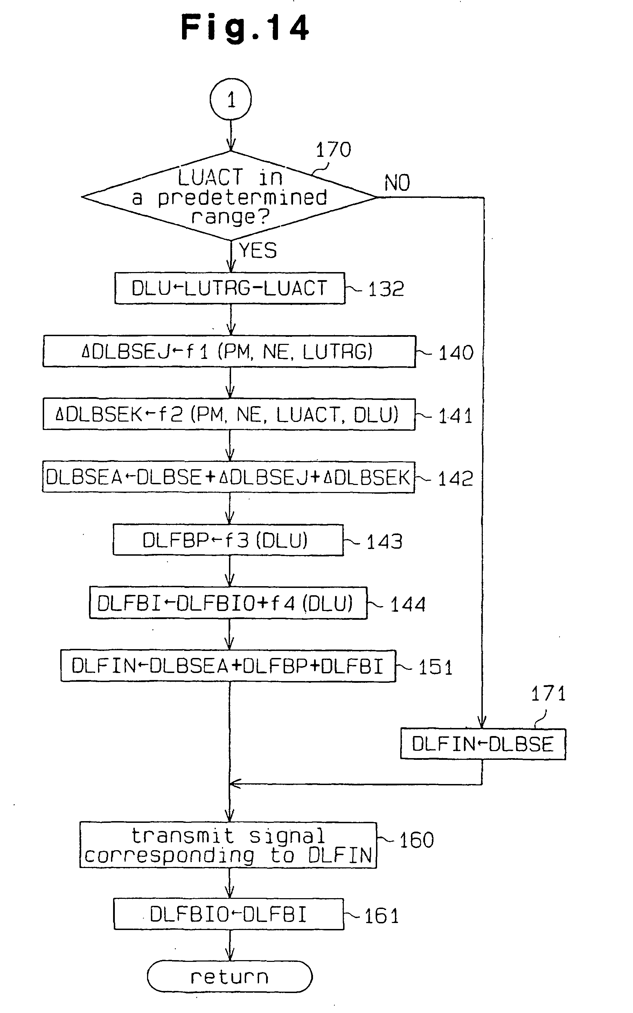

(5) The valve opening control routine according to the second embodiment may be replaced with a routine illustrated in Figs. 13 and 14. The same processes as the second embodiment are performed in the steps having the same numerals as those in the valve opening control routine in Fig. 11.

In step 131 in the flowchart of Fig. 13, the CPU 70 inputs the actual opening LUACT of the valve 25 and moves to step 170 in the flowchart of Fig. 14. In step 170, the CPU 70 judges whether the actual opening LUACT is in a predetermined range (for example $0° \leqq$ LUACT $\leqq 90°$). That is, the CPU 70 judges whether the actual opening LUACT has a normal value, thereby judging whether the valve sensor 58 is normally operating. If the actual opening LUACT is in the predetermined range, the CPU 70 performs the processes of the steps 132 to 161 and temporarily suspends the current routine.

Contrarily, if the actual opening LUACT is out of the predetermined range in step 170, the CPU 70 moves to step 171. In step 171, the CPU 70 adopts the basic control value DLBSE as the final control value DLFIN and moves to step 160. In step 160, the CPU 70 transmits a signal having a duty ratio corresponding to the final control value DLFIN to the first EVRV 34. The CPU 70 then performs the process of step 161 and temporarily suspends the current routine.

The actual opening LUACT is not accurately detected if there is a malfunction in the valve sensor 58. The value of LUACT may be out of the above described predetermined range. Even in this case, employing the routine of Figs. 13 and 14 allows the valve opening control to be performed based on the basic control value DLBSE corresponding to the target opening LUTRG.

An apparatus for controlling intake air in a diesel engine (11) is disclosed. The engine (11) has an air-intake passage (16) and an intake restriction valve (25) in the air-intake passage (16). The restriction valve (25) is coupled to an accelerator pedal (60) and an actuator (26). The restriction valve (25) varies its opening in accordance with the operation of the accelerator pedal (60) and the driving state of the engine (11) to adjust amount of intake air flowing in the air-intake passage (16) to the engine (11). The apparatus is characterized by the actuator (26), an electric vacuum regulating valve (EVRV 34), and an electronic control unit (ECU 39) for compensating a deviation of the opening of the restriction valve (25) based on differential pressure downstreams and upstreams of the valve (25) in the air intake passage (16). The deviation is based on pressure of the intake air applied to the restriction valve (25).

**Claims**

1.  An apparatus for controlling intake air in a combustion engine (11), said engine (11) having an air intake passage (16) and a valve (25) in the air intake passage (16), said valve (25) being coupled to an accelerator pedal (60) and an actuator (26), wherein said valve (25) varies its opening to a target opening (LUTRG) to adjust the amount of intake air flowing in the air intake passage (16) to the engine (11), said target opening (LUTRG) being calculated based on the operation of the accelerator pedal (60) and the driving state of the engine (11), wherein said valve opening is deviated to a deviated opening due to pressure of the intake air applied to the valve (25), said apparatus being **characterized by**
    means (26, 34, 39) for compensating said deviation of the opening of the valve (25) computing a hypothetical basic control value (DLBSE) based on said target opening (LUTRG), and a correction value (ΔDLBSEJ) based on differential pressure downstream and upstream of the valve (25) in the air intake passage (16), said correction value (ΔDLBSEJ) correcting said hypothetical basic control value (DLBSE).

2.  The apparatus as set forth in claim 1, **character-**

**ized in that** said valve includes a throttle valve (25) rotatably disposed in the air intake passage (16) and said valve (25) tends to rotate based on the pressure of the intake air causing the deviation of its opening.

3. The apparatus as set forth in claim 2, **characterized in that** said means (39) computing a re-correction value ($\Delta$DLBSEK) that substantially cancels the undesired force acting on the valve (25).

4. The apparatus as set forth in claims 4 or 5, **characterized in that** said correction value ($\Delta$DLBSEK) increase in proportion to engine speed (NE) and in proportion to pressure of the intake air.

5. The apparatus as set forth in any one of claims 1 to 4, **characterized in that** said computing means includes an electric control unit (26) outputting a duty signal having enablements based on the computed magnitude.

6. The apparatus as set forth in claim 5, **characterized in that** said compensating means further includes a pair of chambers adjacent to each other by way of a diaphragm (27), a rod (26a) connecting the valve (25) with the diaphragm (27), an electromagnetic valve (34) actuated by the duty signal and connected one of said chambers selectively to a negative pressure source (32) and a positive pressure source.

**Patentansprüche**

1. Gerät zum Steuern der Ansaugluft in einem Verbrennungsmotor (11), wobei dieser Motor (11) eine Luftansaugpassage (16) und ein Ventil (25) in der Luftansaugpassage (16) aufweist, wobei dieses Ventil (25) an ein Gaspedal (60) und ein Betätigungsorgan (26) gekuppelt ist, worin das Ventil (25) seine Öffnung zu einer Zielöffnung (LUTRG) variiert, um die Ansaugluftmenge, die in der Luftansaugpassage (16) zum Motor (11) strömt, zu regeln, wobei die Zielöffnung (LUTRG) basierend auf der Bedienung des Gaspedals (60) und des Antriebszustands des Motors (11) berechnet wird, worin die Ventilöffnung eine Abweichung in eine Abweichungsöffnung aufgrund des Ansaugluftdrucks, der an das Ventil (25) angelegt wird, erfährt, und dieses Gerät

    **gekennzeichnet ist durch** Mittel (26, 34, 39) zum Kompensieren dieser Abweichung der Öffnung des Ventils (25), **durch** Berechnung eines hypothetischen Basissteuerungswert (DLBSE) basierend auf der Zielöffnung (LUTRG) und ein Korrekturwerts ($\Delta$DLBSEJ) basierend auf einem Differenzdruck stromabwärts und stromaufwärts vom Ventil (25) in der Ansaugluftpassage (16), wobei dieser Korrekturwert ($\Delta$DLBSEJ) den hypothetischen Basissteuerungswert (DLBSE) korrigiert.

2. Gerät nach Patentanspruch 1, **dadurch gekennzeichnet, dass** das Ventil ein Drosselventil (25) enthält, das drehbar in der Ansaugluftpassage (16) angeordnet ist, und das Ventil (25) aufgrund des Ansaugluftdrucks, der die Abweichung der Öffnung verursacht, zum Drehen tendiert.

3. Gerät nach Patentanspruch 2, **dadurch gekennzeichnet, dass** die Mittel (39) einen Neu-Korrekturwert ($\Delta$DLBSEK) berechnen, der im wesentlichen die auf das Ventil (25) wirkende unerwünschte Kraft auslöscht.

4. Gerät nach den Patentansprüchen 4 oder 5, **dadurch gekennzeichnet, dass** dieser Korrekturwert ($\Delta$DLBSEK) proportional zur Motordrehzahl (NE) und proportional zum Ansaugluftdruck ansteigt.

5. Gerät nach irgendeinem der Patentansprüche 1 bis 4, **dadurch gekennzeichnet, dass** die Rechenmittel ein elektronisches Steuergerät (26) enthalten, das ein Einschaltsignal mit auf der berechneten Größe basierenden Aktivitäten ausgibt.

6. Gerät nach Patentanspruch 5, **dadurch gekennzeichnet, dass** die Kompensationsmittel weiterhin ein Paar Kammern, die zueinander mittels einer Membran (27) benachbart sind, einen das Ventil (25) mit der Membran verbindenden Stab (26a), einem durch das Einschaltsignal betätigtes elektromagnetisches Ventil (34)enthalten, das eine der Kammern selektiv mit einer Quelle (32) negativen Drucks und eine Quelle positiven Drucks verbindet.

**Revendications**

1. Appareil destiné à commander l'air d'admission dans un moteur à combustion (11), ledit moteur (11) comportant un passage d'admission d'air (16) et un clapet (25) dans le passage d'admission d'air (16), ledit clapet (25) étant accouplé à une pédale d'accélérateur (60) et à un actionneur (26), dans lequel l'ouverture dudit clapet (25) varie jusqu'à une ouverture cible (LUTRG) pour régler la quantité d'air d'admission s'écoulant dans le passage d'admission d'air (16) vers le moteur (11), ladite ouverture cible (LUTRG) étant calculée sur la base du fonctionnement de la pédale d'accélérateur (60) et de l'état d'entraînement du moteur (11), dans lequel ladite ouverture de clapet dévie pour une ouverture déviée du fait de la pression de l'air d'admission appliquée au clapet (25), ledit appareil étant **caractérisé par**

des moyens (26, 34, 39) destinés à compenser ladite déviation de l'ouverture du clapet (25) en calculant une valeur de la commande de base hypothétique (DLBSE) basée sur ladite ouverture cible (LUTRG) et une valeur de correction (ΔDLBSEJ) basée sur une pression différentielle en aval et en amont du clapet (25) dans le passage d'admission d'air (16), ladite valeur de correction (ΔDLBSEJ) corrigeant ladite valeur de la commande de base hypothétique (DLBSE).

2. Appareil selon la revendication 1, **caractérisé en ce que** ledit clapet inclut un clapet d'étranglement (25) disposé de façon rotative dans le passage d'admission d'air (16) et **en ce que** ledit clapet (25) tend à tourner sur la base de la pression de l'air d'admission provoquant la déviation de son ouverture.

3. Appareil selon la revendication 2, **caractérisé en ce que** lesdits moyens (39) calculent une valeur de re-correction (ΔDLBSEK) qui annule sensiblement la force indésirable agissant sur le clapet (25).

4. Appareil selon les revendications 4 ou 5, **caractérisé en ce que** ladite valeur de correction (ΔDLBSEK) augmente en proportion de la vitesse du moteur (NE) et en proportion de la pression de l'air d'admission.

5. Appareil selon l'une quelconque des revendications 1 à 4, **caractérisé en ce que** lesdits moyens de calcul comprennent une unité de commande électrique (26) délivrant en sortie un signal de service comportant des validations basées sur l'amplitude calculée.

6. Appareil selon la revendication 5, **caractérisé en ce que** lesdits moyens de compensation comprennent de plus une paire de chambres adjacentes entre elles au moyen d'un diaphragme (27), une tige (26a) reliant le clapet (25) au diaphragme (27), une électrovanne (34) actionnée par le signal de service et raccordant sélectivement à une source de pression négative (32) et à une source de pression positive.

Fig.1

**Fig.2 (a)**

16

fully open

25b

25a

25

26a

**Fig.2 (b)**

16

fully closed

25a

25b

25

26a

# Fig.3

| | | | | 78 | 79 | 74 | | |
|---|---|---|---|---|---|---|---|---|
| 57 | air flow meter | | →buffer ~77 | | | | | ⌐~39 |
| 58 | restriction valve sensor | | →buffer ~77 | | | | | |
| 59 | intake pressure sensor | | →buffer ~77 | multiplexer | A/Dconverter | input port | backup RAM ~73 | |
| 61 | accelerator pedal sensor | | →buffer ~77 | | | | | |
| 62 | intake temperature sensor | | →buffer ~77 | | | | RAM ~72 | |
| 56 | rotational speed sensor | | wave shaper ~80 | | | | ROM ~71 | |
| 54 | spill valve | | driver ~81 | | | | CPU ~70 | |
| 55 | timer | | driver ~81 | | | output port | | |
| 34 | first EVRV | | driver ~81 | | | | | |
| 48 | second EVRV | | driver ~81 | | | ~75 | | |

EP 0 809 006 B1

14

# Fig.4

$$\left(\begin{array}{c}\text{valve opening}\\\text{control routine}\end{array}\right)$$

| read NE, ACCP, PM | ~100 |

| compute QFIN based on NE, ACCP | ~110 |

| compute LUTRG based on NE, QFIN | ~120 |

| compute DLBSE based on LUTRG | ~130 |

| $\Delta$DLBSEJ←f1 (PM, NE, LUTRG) | ~140 |

| DLFIN←DLBSE+$\Delta$DLBSEJ | ~150 |

| transmit signal corresponding to DLFIN | ~160 |

( return )

# Fig.5

# FIG.6(a)

# FIG.6(b)

# Fig.7

# Fig.8

# Fig.9

```
        ┌──────────────────────┐
        │    valve opening     │
        │   control routine    │
        └──────────┬───────────┘
                   ↓
        ┌──────────────────────┐
        │  read NE, ACCP, PM   │~ 100
        └──────────┬───────────┘
                   ↓
        ┌──────────────────────┐
        │ compute QFIN based on│~ 110
        │       NE, ACCP       │
        └──────────┬───────────┘
                   ↓
        ┌──────────────────────┐
        │compute LUTRG based on│~ 120
        │       NE, QFIN       │
        └──────────┬───────────┘
                   ↓
        ┌──────────────────────┐
        │compute DLBSE based on│~ 130
        │        LUTRG         │
        └──────────┬───────────┘
                   ↓
        ┌──────────────────────┐
        │     read LUACT       │~ 131
        └──────────┬───────────┘
                   ↓
        ┌──────────────────────┐
        │  DLU←LUTRG−LUACT     │~ 132
        └──────────┬───────────┘
                   ↓
        ┌────────────────────────────┐
        │ ΔDLBSEJ←f1 (PM, NE, LUTRG)  │~ 140
        └──────────┬─────────────────┘
                   ↓
        ┌─────────────────────────────────┐
        │ ΔDLBSEK←f2 (PM, NE, LUACT, DLU)  │~ 141
        └──────────┬──────────────────────┘
                   ↓
        ┌─────────────────────────────────────┐
        │ DLBSEA←DLBSE+ΔDLBSEJ+ΔDLBSEK         │~ 142
        └──────────┬──────────────────────────┘
                   ↓
        ┌──────────────────────┐
        │   DLFBP←f3 (DLU)      │~ 143
        └──────────┬───────────┘
                   ↓
        ┌──────────────────────────┐
        │ DLFBI←DLFBIO+f4 (DLU)     │~ 144
        └──────────┬───────────────┘
                   ↓
        ┌──────────────────────────────┐
        │ DLFIN←DLBSEA+DLFBP+DLFBI      │~ 151
        └──────────┬───────────────────┘
                   ↓
        ┌──────────────────────┐
        │   transmit signal    │~ 160
        │ corresponding to DLFIN│
        └──────────┬───────────┘
                   ↓
        ┌──────────────────────┐
        │    DLFBIO←DLFBI       │~ 161
        └──────────┬───────────┘
                   ↓
            ┌─────────────┐
            │   return    │
            └─────────────┘
```

# Fig.10

ΔDLBSEK (fully open) (opening θmax·)

ΔDLBSEK (opening θ2·)

ΔDLBSEK (opening θ1·)

ΔDLBSEK (fully closed, opening θmin·)

# Fig.11

LUTRG1
LUACT
LUTRG2

LUACT1
LUACT
LUACT2

example

first embodiment

second embodiment

t1

time

19

# Fig.12

# Fig.13

valve opening
control routine

read NE, ACCP, PM — 100

compute QFIN based on
NE, ACCP — 110

compute LUTRG based on
NE, QFIN — 120

compute DLBSE based on
LUTRG — 130

read LUACT — 131

①

# Fig.14

①

↓

170

LUACT in
a predetermined
range?

NO →

↓ YES

DLU←LUTRG−LUACT ~132

↓

ΔDLBSEJ←f1 (PM, NE, LUTRG) ~140

↓

ΔDLBSEK←f2 (PM, NE, LUACT, DLU) ~141

↓

DLBSEA←DLBSE+ΔDLBSEJ+ΔDLBSEK ~142

↓

DLFBP←f3 (DLU) ~143

↓

DLFBI←DLFBIO+f4 (DLU) ~144

↓

DLFIN←DLBSEA+DLFBP+DLFBI ~151

171

DLFIN←DLBSE

↓

transmit signal
corresponding to DLFIN ~160

↓

DLFBIO←DLFBI ~161

↓

return